# NEUE EUROPÄISCHE PATENTSCHRIFT

(11) **EP 1 476 792 B2**
(45) Veröffentlichungstag und Bekanntmachung des Hinweises auf die Entscheidung über den Einspruch: **14.10.2015**
(45) Hinweis auf die Patenterteilung: 04.04.2012
(21) Anmeldenummer: 03742485.0
(22) Anmeldetag: 12.02.2003
(51) Int. Cl.: G05B 19/042

(54) **Ein Steuersystem und ein Verfahren zum Betreiben einer Sende/Empfang Einrichtung**
Control system and method for operating a transceiver
Système de commande et procédé pour faire fonctionner un dispositif d'émission/réception

(30) Priorität: 18.02.2002 DE 10206745
(43) Veröffentlichungstag der Anmeldung: 17.11.2004
(73) Patentinhaber: Intel Mobile Communications GmbH, 85579 Neubiberg (DE)
(72) Erfinder: STROMBERG, Guido, 80469 München (DE); STURM, Thomas, 85551 Kirchheim (DE)
(74) Vertreter: Viering, Jentschura & Partner Patent- und Rechtsanwälte
(86) Internationale Anmeldenummer: PCT/DE2003/000407
(87) Internationale Veröffentlichungsnummer: WO 2003/071366

(56) Entgegenhaltungen:
- EP-A- 0 620 631
- EP-A- 0 846 991
- EP-A- 1 016 831
- EP-A- 1 091 531
- EP-A1- 0 727 861
- EP-A1- 0 727 862
- EP-A1- 1 185 030
- EP-A2- 0 999 549
- EP-A2- 1 164 215
- EP-A2- 1 186 694
- WO-A-01/41398
- WO-A-01/50261
- WO-A-01/63389
- WO-A-01/86833
- WO-A-02/13039
- WO-A1-00/43891
- DE-A1- 10 000 609
- DE-A1- 10 010 590
- DE-A1- 10 023 703
- DE-A1- 10 030 603
- DE-A1- 19 615 190
- DE-A1- 19 634 165
- DE-A1- 19 705 438
- DE-A1- 19 813 508
- DE-T1- 19 782 219
- DE-T2- 69 020 179
- GB-A- 2 363 218
- JP-A- H11 237 905
- JP-A- 2000 270 384
- JP-A- 2001 224 083
- JP-A- 2001 268 668
- JP-A- 2002 039 536
- KR-A- 20010 090 827
- US-A- 5 306 995
- US-A- 5 938 757
- US-A- 6 121 593
- US-A- 6 163 817
- US-A1- 2001 039 460

## Beschreibung

Die Erfindung betrifft eine Sende-/Empfangs-Einrichtung, eine steuerbare Anwendungs-Anordnung, ein Steuersystem und ein Verfahren zum Betreiben einer Sende-/Empfangs-Einrichtung.

Die Anzahl von Geräten aller Art, beispielsweise im Haushalt, mit einem integrierten Mikroprozessor steigt schnell an und übertrifft bei weitem diejenige von Workstations, Personal Computern und Hochleistungs-Computern.

Daher ist es wünschenswert, Geräte des Alltags wie Sensoren (beispielsweise der Wasserstandssensor einer Hydrokultur); Steuerelektronik (beispielsweise für eine Heizung), Haushaltsgeräte (beispielsweise Waschmaschinen) oder Automobilelektronik (beispielsweise zum Steuern elektrischer Fensterheber) drahtlos mit einer externen Steuer-Vorrichtung wie einem Laptop oder einem Mobilfunktelefon zu koppeln, um eine zentrale Steuerung zu ermöglichen.. Zu diesem Zweck werden häufig zwei Arten von Vorrichtungen miteinander vernetzt. Die eine Art von Vorrichtung ist die externe Steuer-Vorrichtung, also ein Computersystem mit ausreichend hoher Rechenleistung und ausreichend großem Speicherplatz, um andere Vorrichtungen steuern zu können (eine solche externe Steuer-Vorrichtung kann beispielsweise ein Personal-Computer, ein Laptop, ein Personal Digital Assistant oder ein ausreichend leistungsfähiges Mobilfunktelefon sein). Derartige Vorrichtungen können auch als "Mobile Terminal" bezeichnet werden. Die andere Art von Vorrichtung ist eine Sende-/Empfangs-Einrichtung ("Smart Transceiver") mit beschränkter Rechenleistung und Speicherplatz, die in einem Endgerät integriert sein kann (beispielsweise in einem Temperaturfühler, einer Waschmaschine oder einem Automobil).

Abhängig von der jeweiligen zu steuernden Anwendung sind glanz unterschiedliche Anforderungen an Übertragungsgeschwindigkeit, Sicherheit und Ansteuerung zu erfüllen. Mit anderen Worten ist es gemäß dem Stand der Technik erforderlich, die Steuer-Vorrichtung und die Sende-/ Empfangs-Einrichtung speziell aufeinander abzustimmen, insbesondere eine Anwendungs-Steuersoftware auf der Steuer-Vorrichtung zu installieren und die Fähigkeit zur Kommunikation zwischen Steuer-Vorrichtung und Sende-/ Empfangs-Einrichtung sicherzustellen. Ein häufig auftretendes Problem besteht diesbezüglich in der Kompatibilität zwischen der externen Steuer-Einrichtung einerseits und der Sende-/Empfangs-Einrichtung andererseits.

Für die Physikalische Schicht ("Physical layer"), gemäß einem Kommunikations-Schichtenmodell, gemäß dem die drahtlose Kommunikation zwischen der externen Steuer-Vorrichtung und der Sende-/Empfangs-Einrichtung erfolgt, sind Standards definiert und in Gebrauch, wie beispielsweise Bluetooth, IEEE802.11x, RKE, etc.

Auf der Ebene einer Applikation, die zu steuern ist, d.h. gemäß der Anwendungsschicht, wird in der Regel vorausgesetzt, dass beide Geräte, das heißt die externe Steuer-Vorrichtung und die Sende-/Empfangs-Einrichtung, über eine spezifische und aufeinander abgestimmte Kommunikations- und SteuerSoftware für den jeweiligen Partner verfügen. Dies setzt voraus, dass die externe Steuer-Einrichtung einerseits und die Sende-/

Empfangs-Einrichtung andererseits vor der Inbetriebnahme aufeinander im Detail abgestimmt werden. Dies erfordert einen hohen Aufwand und hat eine geringe Flexibilität zur Folge. Um eine der Sende-/Empfangs-Einrichtung zugehörige Applikation unter Verwendung der externen Steuer-Vorrichtung steuern zu können, ist es gemäß dem Stand der Technik häufig erforderlich, vor der ersten Inbetriebnahme das zugehörige Anwendungs-Steuerprogramm in einer Speicher-Einrichtung der externen Steuer-Einrichtung zu speichern, um bei der bedarfsweisen Ausführung der Applikation das Anwendungs-Steuerprogramm innerhalb der externen Steuer-Vorrichtung abzuarbeiten zu können und entsprechende Steuer-Signale an die Sende-/Empfangs-Eihheit zum Steuern der Applikation übermitteln zu können. Daher ist seitens der externen Steuer-Vorrichtung ein hoher Speicherbedarf erforderlich, und es kann bei der bedarfsweisen Steuerung einer Vielzahl unterschiedlicher Applikationen die externe Steuer-Vorrichtung an ihre Kapazitätsgrenzen stoßen.

Ferner sind vor dem erstmaligen Steuern einer Sende-/ Empfangs-Einrichtung zugehörigen Applikation die Sende-/ Empfangs-Einrichtung und die externe Steuer-Einrichtung aufeinander: abzustimmen, um die Voraussetzungen für ein späteres Steuern einer Applikation zu schaffen. Dies ist aufwändig und schwierig und muss häufig von.einem Fachmann durchgeführt werden.

In [1] ist ein PC-basierter Staubsauger-Roboter beschrieben, der Steueranweisungen über eine Funkstrecke von einem in einem PC gespeicherten PC-Programm erhält.

[2] beschreibt einen Fernsehempfänger sowie eine Fernsteuereinrichtung, mittels welcher der Fernsehempfänger ferngesteuert wird. Von der Fernsteuereinrichtung werden dem Fernsehempfänger ein der Fernsteuereinrichtung zugeordneter Identitätscode und Schlüssel oder Algorithmen zur Benutzung als Sicherheitscodes bei nachfolgenden Vorgängen übertragen.

Der Erfindung liegt das Problem zugrunde, das Steuern einer Anwendungs-Vorrichtung unter Verwendung einer Sende-/ Empfangs-Einrichtung beziehungsweise einer externen Steuer-Vorrichtung mit verringertem Aufwand und daher kostengünstiger und flexibler zu ermöglichen.

Das Problem wird durch eine Sende-/Empfangs-Einrichtung, durch eine steuerbare Anwendungs-Anordnung, durch ein Steuersystem und durch ein Verfahren zum Betreiben einer Sende-/Empfangs-Einrichtung mit den Merkmalen.gemäß den unabhängigen Patentansprüchen gelöst.

Die erfindungsgemäße Sende-/Empfangs-Einrichtung hat eine Steuer-Einheit, eine Speicher-Einheit, die mit der Steuer-Einheit gekoppelt ist, eine Steuer-Schnittstelle, die mit der Steuer-Einheit gekoppelt ist und eine Kommunikations-Schnittstelle, die mit der Steuer-Einheit gekoppelt ist. In der Speicher-Einheit ist ein Anwendungs-Steuerprogramm gespeichert. Mittels einer externen Steuer-Vorrichtung ist über die Steuer-Schnittstelle und über die Kommunikations-Schnittstelle unter Verwendung der Steuer-Einheit eine Anwendungs-Vorrichtung steuerbar. Ferner ist über die Kommunikations-Schnittstelle das Anwendungs-Steuerprogramm an die externe Steuer-Einrichtung übermittelbar.

Gemäß einem anderen Aspekt der Erfindung weist die Sende-/ Empfangs-Einrichtung eine Steuer-Einheit, eine Speicher-Einheit, die mit der Steuer-Einheit gekoppelt ist, eine Steuer-Schnittstelle, die mit der Steuer-Einheit gekoppelt ist und eine Kommunikations-Schnittstelle, die mit der Steuer-Einheit gekoppelt ist, auf. In der Speicher-Einheit ist eine ein Anwendungs-Steuerprogramm eindeutig identifizierende Identifikationsangabe gespeichert. Mittels einer externen Steuer-Vorrichtung ist über die Steuer-Schnittstelle und über die Kommunikations-Schnittstelle unter Verwendung.der Steuer-Einheit eine Anwendungs-Vorrichtung steuerbar..Über die Kommunikations-Schnittstelle.ist die Identifikationsangabe an die externe Steuer-Vorrichtung übermittelbar.

Die erfindungsgemäße steuerbare Anwendungs-Anordnung weist eine Anwendungs-Vorrichtung auf, sowie eine mit der Anwendungs-Vorrichtung gekoppelte Sende-/Empfangs-Einrichtung mit den oben genannten Merkmalen. Anders ausgedrückt ist die Sende-/Empfangs-Einrichtung an oder in der steuerbaren Anwendungs-Anordnung angebracht.

Darüber hinaus ist erfindungsgemäß ein Steuersystem für eine Anwendungs-Vorrichtung bereitgestellt mit einer Sende-/ Empfangs-Einrichtung mit den oben genannten Merkmalen sowie mit einer externen Steuer-Vorrichtung. Die externe Steuer-Vorrichtung ist derart eingerichtet, dass sie mit der Sende-/ Empfangs-Einrichtung kommunizieren kann.

Darüber hinaus ist erfindungsgemäß ein Verfahren zum Betreiben einer Sende-/Empfangs-Einrichtung, welche die oben genannten Merkmale aufweist, geschaffen. Gemäß dem Verfahren wird über die Kommunikations-Schnittstelle (bedarfsweise) das Anwendungs-Steuerprogramm an die externe Steuer-Vorrichtung übermittelt. Ferner wird mittels einer externen Steuer-Vorrichtung über die Steuer-Schnittstelle und über die Kommunikations-Schnittstelle unter Verwendung der Steuer-Einheit eine Anwendungs-Vorrichtung gesteuert.

Eine Grundidee der Erfindung besteht darin, den Anforderungen des Steuerns unterschiedlichster Anwendungen durch eine zentrale externe Steuer-Vorrichtung dadurch gerecht zu werden, dass die Sende-/Empfangs-Einrichtung selbst das Anwendungs-Steuerprogramm zum Steuern einer mit einer der Sende-/Empfangs-Einrichtung gekoppelten Anwendungs-Vorrichtung mitführt. Soll beispielsweise eine Waschmaschine von einem Laptop aus gesteuert werden, so ist in der in die Waschmaschine eingebauten Sende-/Empfangs-Einrichtung die Steuersoftware zum Steuern der Waschmaschine enthalten. Soll von dem Laptop aus die Waschmaschine gesteuert werden, so wird die Steuersoftware von der Sende-/Empfangs-Einrichtung auf den Laptop übermittelt, so dass ein leistungsfähiger Prozessor des Laptops die Steuersoftware abarbeiten kann und somit die Waschmaschine steuern kann. Das Anwendungs-Steuerprogramm kann also über die Kommunikations-Schnittstelle an eine externe Steuer-Vorrichtung übermittelt werden. Auf dieser externen Steuer-Vorrichtung, die einen ausreichend leistungsfähigen Mikroprozessor aufweist, kann das Anwendungs-Steuerprogramm abgearbeitet werden und daher die der Sende-/Empfangs-Einrichtung zugeordnete Anwendung gesteuert werden. Dadurch ist ein aufwändiges Vorab-Konfigurieren der externen Steuer-Vorrichtung bzgl. einer Sende-/Empfangs-Einrichtung zum Steuern einer bestimmten Anwendung vor der ersten Benutzung entbehrlich, wodurch Kosten, Zeit und Speicherplatz eingespart sind. Erfindungsgemäß ist anschaulich ein verteiltes System. geschaffen, bei dem eine Sende-/Empfangs-Einrichtung mit einer ihr zuvor möglicherweise unbekannten externen Steuer-Einrichtung kommunizieren kann. Es werden dabei keine Annahmen über die physikalische Schicht getroffen, allerdings wird die Existenz einer IP-fähigen Protokollumsetzungseinheit vorausgesetzt.

Um miteinander kommunizieren zu können, kann eine Kommunikationsverbindung zwischen der Sende-/Empfangs-Einrichtung und der externen Steuer-Vorrichtung unter Verwendung eines hierfür geeigneten Protokolls (beispielsweise CORBA, Common Object Request Broker Architecture) aufgebaut werden.

Ferner kann geprüft werden (beispielsweise unter Übermittlung eines Identifikationscodes), ob das Anwendungs-Steuerprogramm bereits auf einer Speicher-Einrichtung der externen Steuer-Vorrichtung enthalten ist. Ist dies nicht der Fall, so wird das auf der Speicher-Einheit der Sende-/Empfangs-Einrichtung gespeicherte Anwendungs-Steuerprogramm über die Kommunikations-Schnittstelle auf eine Speicher-Einrichtung der externen Steuer-Einrichtung übermittelt, dass heißt. heruntergeladen. Vorzugsweise handelt es sich hierbei um Code für eine Middleware-Plattform wie die Java Virtual Machine (JVM) oder. NET, um eine übergangslose und plattformunabhängige Integration in das System der externen Steuer-Vorrichtung durchführen zu können (steuerbar unter Verwendung eines Web-Browsers).

Die weitere Kommunikation zwischen dem der Speicher-Einrichtung der externen Steuer-Vorrichtung übermittelten Anwendungs-Steuerprogramm und der Steuer-Einheit der Sende-/ Empfangs-Einrichtung kann dann vollständig anwendungsspezifisch erfolgen, d.h. es muss kein Standard festgeschrieben sein. Die Anwendungs-Software wird von einem leistungsfähigen Prozessor der externen Steuer-Vorrichtung ausgeführt, und es wird von dem Prozessor mittels der Steuer-Einheit der Sende-/Empfangs-Einrichtung die Anwendung, die der Sende-/Empfangs-Einrichtung zugehörig ist, gesteuert.

Mit anderen Worten wird von der Sende-/Empfangs-Einrichtung selbst das Anwendungs-Steuerprogramm mitgeführt, welches die externe Steuer-Vorrichtung benötigt, um die Sende-/Empfangs-Einrichtung (beziehungsweise die zugehörige Anwendung oder Applikation) zu steuern. Die Sende-/Empfangs-Einrichtung ist Träger des Software-Codes für die auszuführende Applikation, ist allerdings nicht die ausführende Instanz. Daher kann die Steuer-Einheit der Sende-/Empfangs-Einrichtung beispielsweise als einfacher 8bit-Mikroprozessor ausgeführt sein und muss kein teurer Hochleistungsprozessor sein. Das Anwendungsprogramm wird von der externen Steuer-Vorrichtung ausgeführt, die mit der Sende-/Empfangs-Einrichtung derart kommunizieren kann, dass der hierfür erforderliche Programmcode auf die externe Steuer-Einrichtung übermittelt werden kann.

Bevorzugte Weiterbildungen der Erfindung ergeben sich aus den abhängigen Ansprüchen.

Die Sende-/Empfangs-Einrichtung stellt somit anschaulich vorzugsweise ein Embedded Device dar, welches an.oder in der Anwendungs-Vorrichtung vorgesehen und mit dieser gekoppelt ist.

Vorzugsweise ist die Kommunikations-Schnittstelle der Sende-/ Empfangs-Einrichtung derart eingerichtet, dass die Kommunikation mit einer externen Steuer-Vorrichtung über Funkverbindung erfolgt.

Mit anderen Worten ist eine drahtlose Kommunikation zwischen Sende-/Empfangs-Einrichtung und externer Steuer-Vorrichtung erfindungsgemäß ermöglicht, wodurch der Benutzerkomfort erhöht ist. Die Kommunikation kann beispielsweise mittels Infrarot-Strahlung, Radiowellen-Strahlung oder elektromagnetischer Strahlung einer anderen geeigneten Wellenlänge erfolgen. Alternativ kann die Kommunikation auch mittels eines elektrischen Kopplungsmittels (zum Beispiel einer Stromleitung) erfolgen.

Die Speicher-Einheit der Sende-/Empfangs-Einrichtung kann beschreibbar sein oder kann nicht beschreibbar sein. Vorzugsweise ist die Speicher-Einheit über die Kommunikations-Schnittstelle beschreibbar. Alternativ kann die Speicher-Einheit ein Speicher mit einem ersten und einem zweiten Teilspeicher sein, wobei der erste Teilspeicher beschreibbar ist und wobei der zweite nicht beschreibbar ist.

Insbesondere kann die Speicher-Einheit beziehungsweise der erste Teilspeicher ein Schreib-/Lese-Speicher, d.h. ein RAM-Speicher (Random Access Memory), sein oder ein nichtvolatiler Schreib-Lesespeicher (z.B. EPROM, EEPROM oder FLASH).

Die nicht beschreibbare Speicher-Einheit beziehungsweise der zweite Teilspeicher kann ein Nurlese-Speicher, d.h. ein ROM-Speicher ("Read Only Memory"), sein.

Es ist wünschenswert, dass der Speicher zum Speichern des Anwendungs-Steuerprogramms (Kontroll-Applikation) möglichst klein und kosteneffizient realisiert ist. Daher weist vorzugsweise die Speicher-Einheit der Sende-/Empfangs-Einrichtung eine Speicherkapazität von weniger als einem Megabyte auf.

Die Speicher-Einheit kann einen ersten und einen zweiten Teilspeicher aufweisen, wobei in dem ersten Teilspeicher ein für das Steuern einer ganz bestimmten Anwendung spezifisches Anwendungs-Steuerprogramm gespeichert ist, und wobei in dem zweiten Teilspeicher sonstige Daten gespeichert sind. Bei den sonstigen Daten kann es sich beispielsweise um Information hinsichtlich einer Menüstruktur und/oder Information hinsichtlich einer Benutzeroberfläche handeln.

Die Speicher-Einheit kann einen ersten oder einen zweiten Teilspeicher aufweisen, wobei in dem ersten Teilspeicher spezielle Daten eines Mitglieds einer Applikationsfamilie gespeichert sind und wobei in dem zweiten Teilspeicher einer Applikationsfamilie gemeinsame Daten gespeichert sind.

Bezogen auf die externe Steuer-Einrichtung ("Mobile Terminal") wird ein Anwendungs-Steuerprogramm auf eine Middleware-Plattform heruntergeladen, wo das Anwendungs-Steuerprogramm auf der externen Steuer-Einrichtung ausgeführt werden kann. In der Sende-/Empfangs-Einrichtung kann diese Applikation wahlweise als ein zusammenhängender Block in einer homogenen Speicher-Einheit vorliegen, sie kann jedoch alternativ in (mindestens) zwei Einzelblöcke aufgeteilt sein. Trotz einer häufig hohen Anzahl und Vielfalt von Applikationen, die von einer zentralen externen Steuer-Vorrichtung gesteuert werden sollen, kann abhängig von den Anwendungs-Vorrichtungen, in die eine Sende-/Empfangs-Einrichtung der Erfindung eingebettet sein kann, häufig eine Mehrzahl von Applikationsfamilien unterschieden werden. Zu einer Applikationsfamilie gehören beispielsweise Sende-/ Empfangs-Einrichtungen mit einer gemeinsamen Input/Output-Konfiguration, zum Beispiel A/D-Wandler oder D/A-Wandler, digitale Eingänge bzw. Ausgänge, standardmäßige Industrieschnittstellen, etc. Die Einzelmitglieder einer Applikationsfamilie unterscheiden sich dann beispielsweise in hersteller- und typspezifischen Details.. Die Anwendungs-Steuerprogramme der Mitglieder einer Applikationsfamilie weisen häufig einen hohen kongruenten Softwareanteil auf.. Dieser gemeinsame Anteil kann beispielsweise als ROM-Speicher verwirklicht sein, so dass insbesondere bei hohen Stückzahlen ein beträchtlicher Kostenvorteil erreicht wird.

In einem RAM-Speicher (insbesondere in einem Flash-Speicher) der Speicher-Einheit der erfindungsgemäßen Sende-/Empfangs-Einrichtung kann dann derjenige Anteil eines Anwendung-Steuerprogramms enthalten sein, bezüglich welchem sich die unterschiedlichen Mitglieder einer Applikationsfamilie (beispielsweise unterschiedliche Typen von Waschmaschinen) voneinander unterscheiden. Dabei kann es sich beispielsweise um Konfigurationsdaten (beispielsweise Texte von Bildschirmmenüs) handeln oder um eigenständige Softwareanteile.

Es ist anzumerken, dass der ROM-Anteil beziehungsweise der RAM-Anteil der Speicher-Einheit der Sende-/Empfangs-Einrichtung in der Regel eine von dem Arbeitsspeicher der Sende-/Empfangs-Einrichtung getrennte Komponente ist, die alleine als Träger des Codes des Anwendungs-Steuerprogramms dient. Der gespeicherte Code kann von der Sende-/Empfangs-Einrichtung ohne Interpretation aus deren Speicher-Einheit ausgelesen und an eine Speicher-Einrichtung einer externen Steuer-Einrichtung übertragen werden..Empfängerseitig ist es nicht erforderlich, unterscheiden zu können, welche Codeanteile aus einem RAM-Speicher beziehungsweise aus einem ROM-Speicher stammen.

Zusammenfassend kann festgestellt werden, dass ein Anwendungs-Steuerprogramm in einen ROM-Anteil und in einen RAM-Anteil aufteilbar ist, wobei der ROM-Anteil für unterschiedliche Applikationen nutzbar ist und besonders, kostengünstig gefertigt werden kann. In dem RAM-Anteil sind beispielsweise spezifische Konfigurationen beziehungsweise. spezifische Codebestandteile enthalten. Mit dieser Speicheraufteilung ist eine weitere Kostenersparnis erreicht.

Die Steuer-Einheit der Sende-/Empfangs-Einrichtung kann ein Mikroprozessor sein, insbesondere ein 8bit- oder ein 16bit-Mikroprozessor. Für den Mikroprozessor der Sende-/Empfangs-Einrichtung ist eine vergleichsweise (bezogen auf die Leistungsfähigkeit des Prozessors der externen Steuer-Vorrichtung) eingeschränkte Leistungsfähigkeit ausreichend, da der Mikroprozessor nicht zum selbstständigen Abarbeiten des Anwendungs-Steuerprogramms zum Steuern der zugehörigen Anwendung in der Lage sein muss. Diese Funktionalität wird von dem leistungsfähigeren Prozessor der externen Steuer-Einrichtung übernommen. Die Ausstattung der Sende-/Empfangs-Einrichtung mit einem vergleichsweise einfachen Mikroprozessor bewirkt einen weiteren Kostenvorteil.

Ferner kann die erfindungsgemäße Sende-/Empfangs-Einrichtung eine Initialisier-Einheit aufweisen, die derart eingerichtet ist, dass mittels der Initialisier-Einheit eine Kommunikations-Verbindung mit einer externen Steuer-Vorrichtung aufbaubar ist. Insbesondere kann die Initialisier-Einheit derart eingerichtet sein, das diese zum Aufbau einer Kommunikationsverbindung einer externen Steuer-Vorrichtung an diese ein Signal übermitteln kann. Ergänzend beziehungsweise optional kann die Initialisier-Einheit derart eingerichtet sein, dass diese zum Aufbau.einer Kommunikationsverbindung mit einer externen Steuer-. Vorrichtung ein Signal von einer externen Steuer-Vorrichtung entgegennehmen kann.

Die erfindungsgemäße Sende-/Empfangs-Einrichtung eignet sich besonders gut zum Steuern solcher Anwendungs-Vorrichtungen, die batteriebetrieben sind, d.h. nicht mit einer Steckdose bzw. dem Stromnetz gekoppelt sind. Auch kann die Stromversorgung der Anwendungs-Vorrichtung zum Beispiel mittels einer Solarzelle oder mittels eines Thermogenerators realisiert sein. Unter diesem Gesichtspunkt ist es wünschenswert, dass die einer Sende-/Empfangs-Einrichtung zugehörige Anwendungs-Vorrichtung besonders energiesparend realisiert ist. In einem Szenario., in dem die Sende-/ Empfangs-Einrichtung externe Signale der externen Steuer-Vorrichtung zum Aufbau einer Kommunikationsverbindung entgegennimmt und selbst nur wenige solche Signale aussendet, ist eine Sende-/Empfangs-Einrichtung mit einem geringen Energiebedarf geschaffen. Ist beispielsweise eine externe Steuer-Vorrichtung zum Steuern der Haushaltsgeräte eines Wohnhauses vorgesehen, so kann die externe Steuer-Vorrichtung in einer vorgegebenen zeitlichen Abfolge (z.B. jede Sekunde, Minute oder Stunde) Kommunikationssignale aussenden, die eine Sende-/Empfangs-Einrichtung einer zugeordneten Anwendungs-Vorrichtung empfangen kann, beispielsweise wenn ein Benutzer mit einer externen Steuer-Einrichtung einen Raum betritt. Nach Empfang entsprechender Kommunikationssignale von der externen Steuer-Vorrichtung durch die Sende-/Empfangs-Einrichtung kann die Sende-/Empfangs-Einrichtung ein. Bestätigungssignal an die externe Steuer-Vorrichtung zurücksenden.

Als Kommunikationsprotokoll zum Kommunizieren zwischen der Initialisier-Einheit und einer externen Steuer-Vorrichtung kann beispielsweise eines der folgenden Kommunikationsprotokolle verwendet werden: Common Object . Request Broker Architecture (CORBA), Simple Service Discovery Protocol (SSDP), JXTA oder Java Intelligent.Network Infrastructure (JINI). Insbesondere wird vorzugsweise für die Kommunikation der Initialisier-Einheit ("Discovery Protocol") ein Standardprotokoll verwendet. Da in der Regel nur ein einziger Dienst anzubieten ist, nämlich der Dienst des Übermittelns des Anwendungs-Steuerprogramms, ist auch eine einfache Version eines dieser Protokolle ("Light-Version") oder ein proprietäres Protokoll einsetzbar.

Das Anwender-Steuerprogramm kann.beispielsweise als Java-Code vorliegen.

Vorzugsweise ist die Sende-/Empfangs-Einrichtung als "Embedded System" ausgestaltet. Als Embedded System ist eine verglichen mit einem Server erheblich kleinere Ausprägung eines Prozessrechnersystems bekannt, das insbesondere folgende Eigenschaften aufweist: ein Embedded System ist in der. Regel Bestandteil eines anderen Gerätes (häufig in dieses eingebaut), dessen Funktion wesentlich durch das Embedded. System definiert ist. Insbesondere kann ein Embedded System ein in ein anderes Gerät integriertes Messwert-Vorverarbeitungssystem sein. Gegenüber größeren Prozessrechnersystemen ist bei einem Embedded System eine Einrichtung für eine Mensch-Maschine-Kommunikation nicht oder nur schwach ausgeprägt. Häufig gibt es eine Tastatur oder eine Anzeige, über welche nicht das Embedded System, sondern das Anwendungsgerät bedienbar ist. Gegenstück zu einem Embedded System wäre beispielsweise ein Computerserver.

Im Weiteren wird die erfindungsgemäße steuerbare Anwendungs-Anordnung, welche die erfindungsgemäße Sende-/Empfangs-Einrichtung aufweist, näher beschrieben. Ausgestaltungen der Sende-/Empfangs-Einrichtung gelten auch für die steuerbare Anwendungs-Anordnung.

Die Anwendungs-Vorrichtung kann beispielsweise eine Sensor-Einrichtung, eine elektronische Steuer-Einrichtung, eine Automobilelektronik oder ein Haushaltsgerät sein. Eine als Sensor-Einrichtung ausgebildete Anwendungs-Vorrichtung kann zum Beispiel ein Temperatur-Sensor, ein Füllstands-Sensor, ein Feuchtigkeits-Sensor, ein Gas-Sensor oder ein Druck-. Sensor sein. Eine als Haushaltsgerät ausgebildete Vorrichtung kann zum Beispiel ein Kühlschrank, eine Stereoanlage, eine Heizung oder ein Herd sein.

Im Weiteren wird das erfindungsgemäße Steuersystem für eine Anwendungs-Vorrichtung, das eine erfindungsgemäße Sende-/ Empfangs-Einrichtung aufweist, näher beschrieben. Ausgestaltungen der Sende-/Empfangs-Einrichtung gelten auch für das Steuersystem für eine Anwendungs-Vorrichtung.

Die externe Steuer-Vorrichtung kann ein Personal-Computer, ein Laptop, ein ausreichend leistungsfähiges Mobilfunktelefon, ein Palm^{™} oder ein Personal Digital Assistant sein.

Die externe Steuer-Vorrichtung des erfindungsgemäßen Steuersystems kann eine Speicher-Einrichtung zum Speichern mindestens eines Anwendungs-Steuerprogramms sowie einen Prozessor aufweisen, welcher derart eingerichtet ist, dass er ein Anwendungs-Steuerprogramm ausführen kann, um dadurch eine mit der Sende-/Empfangs-Einrichtung gekoppelte Anwendungs-Vorrichtung zu steuern.

Die externe Steuer-Vorrichtung kann eine Speicherdauer-Verwaltungs-Einrichtung aufweisen, die derart eingerichtet ist, dass sie für jedes in der Speicher-Einrichtung gespeicherte Anwendungs-Steuerprogramm einen Zeitwert vorgibt, der angibt, nach welcher Zeit ein Anwendungs-Steuerprogramm aus der Speicher-Einrichtung gelöscht wird. Der Zeitwert kann von der Speicherdauer-Verwaltungs-Einrichtung auf der Basis mindestens eines der folgenden Kriterien vorgegeben werden: Wie häufig wurde das Anwendungs-Steuerprogramm in der Vergangenheit ausgeführt? Wann wurde das Anwendungs-Steuerprogramm zuletzt ausgeführt? Welchen Speicherbedarf hat das Anwendungs-Steuerprogramm? Welche.Art von Anwendung hat das Anwendungs-Steuerprogramm zum Gegenstand?

Beispielsweise kann die Speicherdauer-Verwaltungs-Einrichtung einen vergleichsweise kurzen Zeitwert für ein Anwendungs-Steuerprogramm vorgeben, das in der Vergangenheit sehr selten ausgeführt wurde und das einen hohen Speicherbedarf hat. Nach Ablauf einer Zeit, die dem vorgegebenen Zeitwert entspricht, kann dieses Anwendungs-Steuerprogramm aus der Speicher-Einrichtung gelöscht werden.

Mit anderen Worten wird von der Speicherdauer-Verwaltungs-Einrichtung die Speicher-Einrichtung der externen Steuer-Einrichtung verwaltet. Erfordert ein Anwendungs-Steuerprogramm beispielsweise einen hohen Speicherbedarf und wurde dieses Anwendungs-Steuerprogramm, das zu einem Zeitpunkt in der Vergangenheit von einer Sende-/Empfangs-Einrichtung der externen Steuereinrichtung übermittelt wurde, nur selten beziehungsweise nur in großen Zeitabständen verwendet, so wird das Anwendungs-Steuerprogramm nach Ablauf des zugehörigen Zeitwertes gelöscht. Es sind weitere Kriterien denkbar, auf Basis welcher von der Speicherdauer-Verwaltungs-Einrichtung ein Zeitwert eines Anwendungs-Steuerprogramms vorgegeben wird.

In der externen Steuer-Vorrichtung kann ferner eine Abfrage-Einheit enthalten sein, welche derart eingerichtet ist, dass mit dieser ermittelbar ist, ob in der Speicher-Einrichtung bereits ein in der Speicher-Einheit gespeichertes Anwendungs-Steuerprogramm enthalten ist. Falls mittels der Abfrage-Einheit ermittelt ist, dass in der Speicher-Einrichtung ein in der Speicher-Einheit gespeichertes Anwendungs-Steuerprogramm bereits enthalten ist, wird das Anwendungs-Steuerprogramm der externen Steuer-Vorrichtung nicht übermittelt. Anderenfalls wird das Anwendungs-Steuerprogramm der externen Steuer-Vorrichtung übermittelt.

Gemäß der Sende-/Empfangs-Einrichtung gemäß einem anderen Aspekt der Erfindung ist anstelle des Anwendungs-Steuerprogramms eine das Anwendungs-Steuerprogramm eindeutig identifizierende Identifikationsangabe in der Speicher-. Einheit gespeichert. Diese Identifikationsangabe kann eine Internetadresse sein, von der aus die externe Steuer-Einrichtung das Anwendungs-Steuerprogramm aus dem Internet herunterladen kann. Mit anderen Worten ist es auch möglich, dass ein Anwendungs-Steuerprogramm von einer HTML-Seite aus dem Internet heruntergeladen wird. In diesem Szenario ist es lediglich erforderlich, dass die Sende-/Empfangs-Einrichtung der externen Steuer-Vorrichtung diejenige Adresse einer HTML-Seite übermittelt, von der das Anwendungs-Steuerprogramm herunterladbar ist. Dann kann das Anwendungs-Steuerprogramm von der externen Steuer-Einrichtung aus dem Internet heruntergeladen werden, so dass ein Übermitteln des gesamten Codes von der Sende-/Empfangs-Einrichtung auf die externen. Steuer-Vorrichtung entbehrlich ist.

Die externe Steuer-Vorrichtung kann mittels eines Browsers gesteuert werden.

Ferner ist erfindungsgemäß ein Verfahren zum Betreiben einer Sende-/Empfangs-Einrichtung bereitgestellt. Gemäß einer bevorzugten Ausgestaltung des erfindungsgemäßen Verfahrens wird mittels einer Initialisier-Einheit eine Kommunikatiöns-Verbindung mit der externen Steuer-Vorrichtung aufgebaut: Ferner kann mittels einer Abfrage-Einheit ermittelt werden, ob in der Speicher-Einrichtung bereits ein in der Speicher-Einheit gespeichertes Anwendungs-Steuerprogramm enthalten ist oder nicht.

Ausführungsbeispiele der Erfindung sind in den Figuren dargestellt und werden im Weiteren näher erläutert.

Es zeigen:
- Figur 1: eine schematische Ansicht einer steuerbaren Anwendungs-Anordnung samt externer Steuer-Vorrichtung gemäß einem bevorzugten Ausführungsbeispiel der Erfindung,
- Figur 2: ein Steuersystem gemäß einem bevorzugten Ausführungsbeispiel der Erfindung,
- Figur 3: eine Sende-/Empfangs-Einrichtung gemäß einem bevorzugten Ausführungsbeispiel der Erfindung,
- Figur 4: eine Speicher-Einheit einer Sende-/Empfangs-Einrichtung gemäß einem bevorzugen Ausführungsbeispiel der Erfindung.

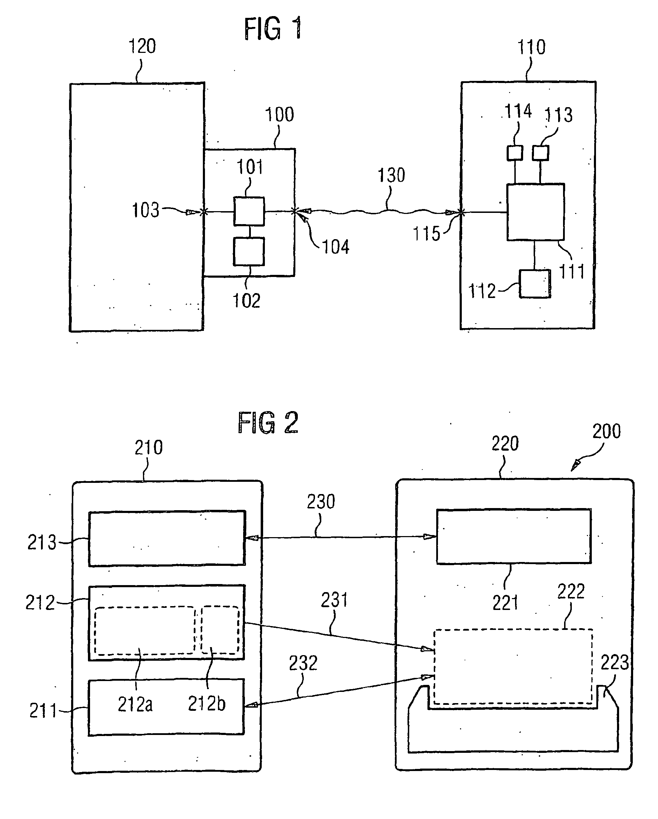

In Fig.1 ist eine steuerbare Anwendungs-Anordnung aus einer Sende-/Empfangs-Einrichtung 100 und einer Waschmaschine 120 gemäß einem bevorzugten Ausführungsbeispiel der Erfindung gezeigt.

Die Sende-/Empfangs-Einrichtung 100 ("Transceiver") weist einen 8bit-Mikroprozessor 101 als Steuer-Einheit auf. Ferner weist die Sende-/Empfangs-Einrichtung 100 eine Speicher-Einheit 102 mit einer Speicherkapazität von 128kB auf, welche Speicher-Einheit 102 mit dem 8bit-Mikroprozessor 101 gekoppelt ist. Ferner weist die Sende-/Empfangs-Einrichtung 100 eine Kommunikations-Schnittstelle 104 auf, die mit dem 8bit-Mikroprozessor 101 gekoppelt ist. In der Speicher-Einheit 102 ist ein Anwendungs-Steuerprogramm zum Steuern der Waschmaschine 120 gespeichert. Mittels eines Laptops 110 als externer Steuer-Vorrichtung ist über die Steuer-Schnittstelle 103 und über die Kommunikations-Schnittstelle 104 unter Verwendung des 8bit- Mikroprozessors 101 die Waschmaschine 120 als Anwendungs-Vorrichtung steuerbar. Über die Kommunikations-Schnittstelle 104 ist das Anwendungs-Steuerprogramm zum Steuern der Waschmaschine 120 an den Laptop 110 übermittelbar. Mit dem Pfeil 130 ist angedeutet, dass die Kommunikations-Schnittstelle 104 derart eingerichtet ist, dass die Kommunikation zwischen der Sende-/Empfangs-Einrichtung 100 und dem Laptop 110 mittels wechselseitigen Übermittelns von Infrarotstrahlung, das heißt über eine Funkverbindung, erfolgt. Das Anwendungs-Steuerprogramm, das in der Speicher-Einheit 102 der Sende-/Empfangs-Einrichtung 100 gespeichert ist, liegt als Java-Code vor. Die Sende-/ Empfangs-Einrichtung 100 ist als Embedded System ausgestaltet und ist in die Waschmaschine 120 eingebaut.

Der Laptop 110 hat eine zentrale Datenverarbeitungseinheit CPU 111, die wesentlich leistungsfähiger ist als der 8bit-Mikroprozessor 101. Insbesondere reicht die Leistungsfähigkeit der CPU 111 aus, um das Anwendungs-Steuerprogramm zum Steuern der Waschmaschine 120 auszuführen. Ferner weist der Laptop 110 einen Festplattenspeicher 112 mit einer Kapazität von 5GB als Speicher-Einrichtung auf. Die CPU 111 ist derart eingerichtet, dass sie ein Anwendungs-Steuerprogramm ausführen kann, um die mit der Sende-/ Empfangs-Einrichtung 100 gekoppelte Waschmaschine 120 zu steuern. Ferner weist der Laptop 110 eine Speicherdauer-Verwaltungs-Einrichtung 113 auf, die derart eingerichtet ist, dass sie für jedes in dem Festplattenspeicher 112 gespeicherte Anwendungs-Steuerprogramm einen Zeitwert vorgibt, der angibt, nach welcher Zeit das jeweilige Anwendungs-Steuerprogramm von dem Festplattenspeicher 112 gelöscht wird.

Im Weiteren wird die Funktionsweise des in Fig.1 gezeigten Systems beschrieben.

Betritt ein Benutzer mit dem Laptop 110 den Raum, in dem die Waschmaschine 120 aufgestellt ist, so wird eine Kommunikations-Verbindung zwischen der Sende-/Empfangs-Einrichtung 100 und dem Laptop 110 aufgebaut, indem eine Initialisier-Einheit der. Sende-/Empfangs-Einrichtung ein Signal von dem Laptop 110 entgegennimmt (nicht gezeigt in der Figur).

Eine.Abfrage-Einheit 114 des Laptops 110 ist derart eingerichtet, dass mit dieser ermittelbar ist, ob in dem Festplattenspeicher 112 bereits das in der Speicher-Einheit 102 der Sende-/Empfangs-Einrichtung 100 gespeicherte Anwendungs-Steuerprogramm zum Steuern der Waschmaschine 120 enthalten ist. Gemäß dem vorliegenden Szenario in dem beschriebenen Ausführungsbeispiel ist in dem Festplattenspeicher 112.ein solches Anwendungs-Steuerprogramm nicht gespeichert.

Mittels der Abfrage-Einheit 114 ist daher ermittelt, dass in dem Festplattenspeicher 112 das Anwendungs-Steuerprogramm zum Steuern der Waschmaschine 120 nicht gespeichert ist. Da das zum Steuern der Waschmaschine 120 erforderliche Anwendungs-Steuerprogramm zum Steuern der Waschmaschine 120.in dem Festplattenspeicher 112 des Laptops 110 nicht gespeichert ist, wird über die Kommunikations-Schnittstelle 104 das in der Speicher-Einheit 102 der Sende-/Empfangs-Einrichtung 100 gespeicherte Anwendungs-Steuerprogramm zum Steuern der Waschmaschine 120 über eine Laptop-Schnittstelle 115 an den Laptop 110 übermittelt und in dem Festplattenspeicher 112 gespeichert.

Mittels der Speicherdauer-Verwaltungs-Einrichtung 113 wird dem in dem Festplattenspeicher 112 gespeicherten Anwendungs-Steuerprogramm basierend auf dem Speicherbedarf des Anwendungs-Steuerprogramm und basierend auf der Art der Anwendung ("Waschmaschine") ein Zeitwert zugeordnet, nach dem das Anwendungs-Steuerprogramm von dem Festplattenspeicher 112 gelöscht wird. Gemäß dem beschriebenen Ausführungsbeispiel wird dem Anwendungs-Steuerprogramm zum Steuern der Waschmaschine 120 der Zeitwert "sechs Monate" zugeordnet.

Nach Speichern des Anwendungs-Steuerprogramms zum Steuern der Waschmaschine 120 in dem Festplattenspeicher 112 des Laptops 110 kann mittels der CPU 111 des Laptops 110 das Anwendungs-Steuerprogramm zum Steuern der Waschmaschine 120 abgearbeitet werden. Auf diese Weise wird über die Laptop-Schnittstelle 115, die Kommunikations-Schnittstelle 104 und über die Steuer-Schnittstelle 103 unter Verwendung des 8bit-Mikroprozessors 101 die Waschmaschine 120 gesteuert.

Nach Ablauf des vorgegebenen Zeitwerts ("sechs Monate") wird das Anwendungs-Steuerprogramm zum Steuern der Waschmaschine 120 von dem Festplattenspeicher 112 gelöscht, sofern innerhalb dieses Zeitraums das Anwendungs-Steuerprogramm nicht mindestens ein weiteres Mal benutzt wurde. Bei jedem Benutzungsvorgang des Anwendungs-Steuerprogramms zum Steuern der Waschmaschine 120 beginnt gemäß dem beschriebenen Ausführungsbeispiel der Zeitwert von neuem zu laufen.

Im Weiteren wird bezugnehmend auf Fig.2 ein Steuersystem 200 zum Steuern einer Anwendungs-Vorrichtung (nicht gezeigt in der Figur) beschrieben. Das Steuersystem 200 weist eine Sende-/Empfangs-Einrichtung 210 und einem Personal-Computer 220 auf, der derart eingerichtet ist, dass er mit der Sende-/ Empfangs-Einrichtung 210 kommunizieren kann.

Die Sende-/Empfangs-Einrichtung 210 weist eine Steuer-Einheit 211 (ein 16bit-Mikroprozessor) auf. Ferner weist die Sende-/ Empfangs-Einrichtung 210 eine Speicher-Einheit 212 und eine Initialisier-Einrichtung 213 auf. Die Speicher-Einheit 212 ist in einem ROM-Teilspeicher 212a und einem Flash-Teilspeicher (RAM-Speicher) 212b aufgeteilt. In der Speicher-Einheit 212 ist ein Anwendungs-Steuerprogramm zum Steuern einer Anwendungs-Steuervorrichtung gespeichert. In dem ROM-Teilspeicher 212a sind einer Applikationsfamilie gemeinsame Daten gespeichert, wohingegen in dem Flash-Teilspeicher 212b spezielle Daten eines Mitglieds einer Applikationsfamilie gespeichert sind.

Gemäß dem beschriebenen Ausführungsbeispiel steht die Applikationsfamilie für unterschiedliche Waschmaschinentypen eines bestimmten Herstellers. Diejenigen Daten bzw. derjenige Code, die/der zum Steuern aller Waschmaschinen des Herstellers erforderlich sind, sind in dem ROM-Teilspeicher 212a gespeichert. Dagegen ist derjenige Steuercode des Anwendungs-Steuerprogramms zum Steuern der Waschmaschine des Typs XY, der von dem Steuercode zum Steuern anderer. Waschmaschinentypen (Typ XZ, YZ, etc.) des Herstellers abweichen, in dem Flash-Teilspeicher 212b gespeichert.

Ferner ist ein Personal-Computer 220 gezeigt, der ein Kommunikations-Modul 221, einen Festplattenspeicher 222 und eine Middleware-Plattform 223 (Java Virtual Machine) aufweist. Unter Middleware ist gemäß diesem Ausführungsbeispiel eine Interpreter-Software zu verstehen, mittels der ein Zusammenspiel von Hard- und Softwarekomponenten realisiert wird, unabhängig von der tatsächlichen Hardware, d.h. plattformunabhängig.

Im Weiteren wird die Kommunikation zwischen der Sende-/ Empfangs-Einrichtung 210 und dem Personal-Computer 220 beschrieben.

Zunächst wird die Kommunikation zwischen der Sende-/Empfangs-Einrichtung 210 und dem Personal-Computer 220 initialisiert, d.h. eine Kommunikationsverbindung aufgebaut. Als Kommunikationsprotokoll zum Kommunizieren der Initialisier-Einheit 213 mit dem Kommunikations-Modul 221 des Personal-Computers 220 wird Java Intelligent Network Infrastructure (JINI) verwendet. Die Phase, in der die Sende-/Empfangs-Einrichtung 210 und der Personal-Computer 220 miteinander Kontakt aufnehmen, kann als "Discovery Phase" bezeichnet werden. Die initiale Kommunikation ist durch den Pfeil 230 gekennzeichnet.

Falls in dem Festplattenspeicher 222 die Anwendungs-Steuersoftware der Speicher-Einheit 212 nicht enthalten ist, wird die Steuersoftware an den Personalcomputer 220 übermittelt und im Festplattenspeicher 222 gespeichert. Die Entscheidung darüber, ob das Anwendungs-Steuerprogramm übermittelt werden soll, erfolgt auf Basis einer Identifikationsnummer, die von der Sende-/Empfangs-Einrichtung 210 an den Personal-Computer 220 übermittelt wird. Auf Basis der Identifikationsnummer wird überprüft, ob das der Identifikationsnummer zugeordnete.Anwendungs-Steuerprogramm auf der Festplatte 222 bereits enthalten ist oder nicht. Bedarfsweise wird auf Basis des Ergebnisses der Prüfung das Anwendungs-Steuerprogramm von der Speicher-Einheit 212 der Sende-/Empfangs-Einheit 210 dem Festplattenspeicher 222 des Personal-Computers 220 übermittelt. Dies ist durch einen Pfeil 230 gekennzeichnet.

Nach Durchführung des Download-Schrittes wird eine Anwendungs-Vorrichtung (nicht gezeigt in Fig.2) mittels der Middleware-Plattform 223 beziehungsweise des in dem Festplattenspeicher 222 gespeicherten Anwendungs-Steuerprogramms über die Steuer-Einheit 211 gesteuert. Diese anwendungsspezifische Kommunikation ist mit dem Pfeil 232 gekennzeichnet.

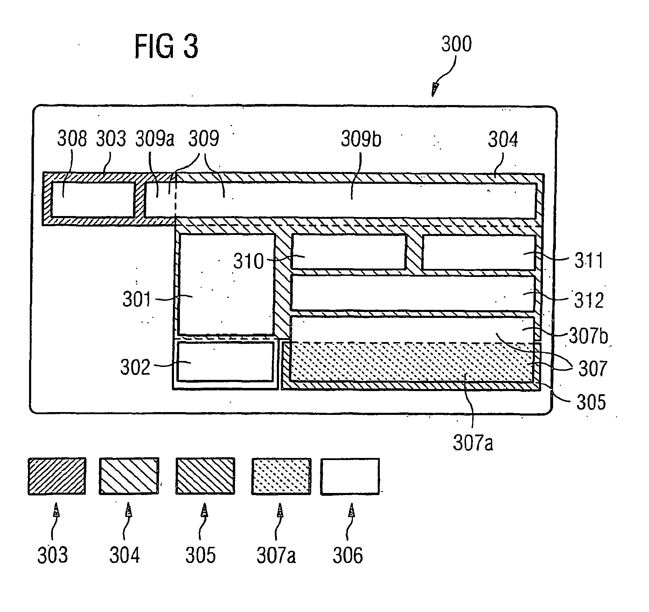

Im Weiteren wird bezugnehmend auf Fig.3 eine Sende-/Empfangs-Einrichtung 300 gemäß einer bevorzugten Ausführungsbeispiels der Erfindung beschrieben.

Die Sende-/Empfangs-Einrichtung 300 weist eine als 8bit-Mikroprozessor realisierte Steuer-Einheit 301, eine Eingabe-/ Ausgabe-Einheit 302, einen als Flash-Speicher ausgebildeten Teilspeicher 303, einen als ROM-Speicher ausgebildeten zweiten Teilspeicher 304, eine RF-Sende-/Empfangs-Einheit 305 (RF=Radio Frequency) und einen Embedded Mikrocontroller 306 auf. Ferner ist in Fig.3 eine physikalische Kommunikationsschicht-Einheit 307 schematisch gezeigt, die einen ersten Teilbereich 307a aufweist, der.Teil der RF-Sende-/Empfangs-Einheit 305 ist, und die einen zweiten Teilbereich 307b aufweist, die dem Mikrocontroller 306 zugerechnet wird. Ferner sind die Konfigurationsdaten 308 Teil des Mikrocontrollers 306. Darüber hinaus ist in Fig.3 ein Anwendungs-Steuerprogramm 309 schematisch gezeigt, das ebenfalls dem Mikrocontroller 306 zugerechnet werden kann. Ferner ist ein Initialisier-Protokoll 310 in der Sende-/ Empfangs-Einrichtung 300 enthalten, das ebenfalls Teil des Mikrocontrollers 306 ist. Ein Übermittlungs-Protokoll 311 ist darüber hinaus in der Sende-/Empfangs-Einrichtung 300 vorgesehen und ist ebenfalls Teil des Mikrocontrollers 306. Ferner ist ein TCP/IP-Protokoll 312 als weiterer Teil des Mikrocontrollers 306 vorgesehen (TCP/IP: Transmission Control Protocol/Internet Protocol).

Wie in Fig.3 schematisch gezeigt, sind die Konfigurationsdaten 308 in dem Flash-Speicher 303 gespeichert. Ebenfalls in dem Flash-Speicher 303 gespeichert ist ein erster Teilbereich 309a des Anwendungs-Steuerprogramms 309. Dieser Teilbereich 309a enthält Daten, die auf eine zu steuernde Anwendungs-Vorrichtung speziell abgestimmt sind. Mit.anderen Worten sind diese Daten nicht gemeinsame Daten der Applikationsfamilie, zu der die zu steuernde Anwendungs-Vorrichtung gehört.. Diese Daten sind vielmehr solche Daten, die für die Anwendungs-Vorrichtung als Mitglied einer Applikationsfamilie speziell vorgesehen sind, und die sich von den Steuerdaten anderer Mitglieder der Applikationsfamilie unterscheiden. Dagegen ist der zweite Teilbereich 309b des Anwendungs-Steuerprogramms 309 in dem ROM-Speicher 304 gespeichert und enthält solche Daten, die der Applikationsfamilie, welcher die Anwendungs-Vorrichtung als Mitglied zugehörig ist, erforderlich sind. Der TCP/IP-Protokoll-Stack 312 ist ebenfalls als Computerprogramm realisiert in dem ROM-Speicher 304 gespeichert. Das Initialisier-Protokoll 310 enthält Daten, die zum Aufbau einer Kommunikationsverbindung mit einer externen Steuer-Vorrichtung erforderlich sind. Das Übermittlungs-Protokoll 311 enthält Daten, die erforderlich sind, wenn Konfigurationsdaten 308 beziehungsweise das Anwendungs-Steuerprogramm 309 von der Sende-/Empfangs-Einrichtung 300 an eine externe Steuer-Vorrichtung übermittelt werden sollen. Das Anwendungs-Steuerprogramm 309 beziehungsweise die Konfigurationsdaten 308 werden von einer CPU einer externen Steuer-Vorrichtung abgearbeitet. Über die Steuer-Einheit 301 wird eine an die Sende-/Empfangs-Einheit 300 angeschlossene Anwendungs-Vorrichtung (beispielsweise eine Waschmaschine) gesteuert. Die Steuerung erfolgt über die Eingabe-/Ausgabe-Einheit 302. Diese stellt eine Schnittstelle zwischen der Steuer-Einheit 301 und der zu steuernden Anwendungs-Vorrichtung her. Über die Eingabe-/Ausgabe-Einheit 302 erfolgt der Datentransfer von der Sende-/Empfangs-Einrichtung 300 zu der Anwendungs-Vorrichtung.

Gemäß einem bevorzugten Ausführungsbeispiel ist die Middleware-Plattform (vergleiche Element 223 in Fig.2) der externen Steuer-Vorrichtung eine Java Virtual Machine^{™}. Gemäß diesem Beispielsfall ist der von der Sende-/Empfangs-Einrichtung der externen Steuer-Einrichtung zu übermittelnde Applikationscode ein Java-Applet^{™} (Codeausführung innerhalb eines Internet-Browsers) beziehungsweise eine Java-Applikation^{™} (Codeausführung durch eine Starter-Applikation der externen Steuer-Vorrichtung) beziehungsweise ein Java-Plugin (Codeausführung innerhalb einer laufenden Applikation). Eine Java-Applikation ist ein eigenständiges, mit einem Java-Interpreter ausführbares Java-Programm. Ein Java-Applet ist ein Java-Programm, welches in einen.laufenden WWW-Browser geladen werden kann. Ein Java-Plugin ein Java-Programm, welches innerhalb einer laufenden Applikation ausgeführt werden kann und sich der Ressourcen der Applikation bedient bzw. Dienste für die Applikation zur Verfügung stellt. Das Anwendungs-Steuerprogramm kann aus Java-Klassendateien und Ressource-Dateien (beispielsweise Bilderdateien, Audiodateien, etc.) zusammengesetzt sein, die industrieüblich in eine oder mehrere Jar-Archivdateien zusammengefasst sind. Dabei kann nicht nur eine Bündelung erfolgen, sondern Klassen und Ressourcen werden in Jar-Archiven komprimiert gespeichert. Auf diese Weise wird nicht nur die Kommunikation des Codes minimalisiert, sondern auch der Speicheraufwand auf Seiten der Sende-/Empfangs-Einrichtung.

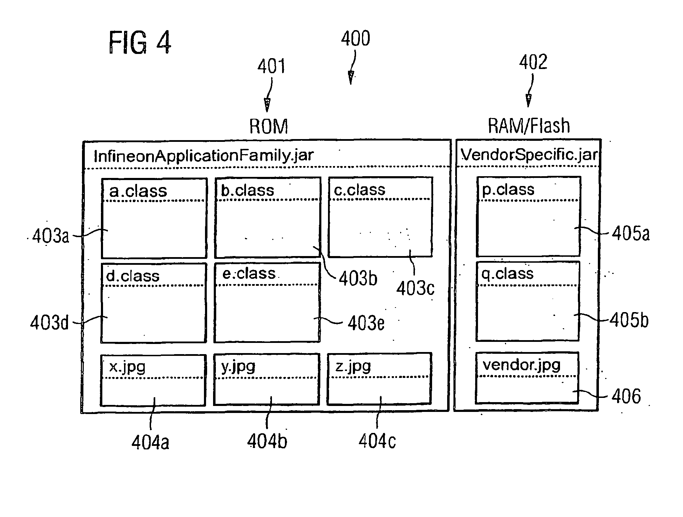

Im Weiteren wird bezugnehmend auf Fig.4 die Aufteilung zu speichernder Informationen in einer Speicher-Einheit 400 einer Sende-/Empfangs-Einrichtung beschrieben.

Die Speicher-Einheit 400 ist aufgeteilt in einen ROM-Teilspeicher 401 und in einen RAM/Flash-Speicher 402. Ein Anwendungs-Steuerprogramm zum Steuern einer Anwendungs-Vorrichtung ist in zwei Jar-Archive unterteilt, nämlich in das "InfineonApplicationFamily.jar" Archiv und in das "VendorSpecific.jar" Archiv.

In dem "InfineonApplicationFamily.jar"-Archiv sind erste bis fünfte Oberklassen 403a bis 403e und erste bis dritte Ressourcen-Dateien 404a bis 404c für eine Applikationsfamilie zusammengefasst. In dem beschriebenen Beispielsfall sind die Ressourcen-Dateien 404a bis 404c jeweils Graphikdateien im jpg-Format.

In dem Archiv "VendorSpecific.jar" befinden sich eine erste Unterklasse 405a und eine zweite Unterklasse 405b sowie eine Ressourcen-Datei 406, wiederum eine jpg-Graphikdatei.

Die Verwendung von Klassen in dem RAM-Flash-Speicher 402 list nicht unbedingt erforderlich. Die Ressourcen-Datei 406 enthält herstellerspezifische Ressourcen, beispielsweise ein Firmenlogo oder Textdateien, zum Beispiel für einen speziellen Menüaufbau.

In diesem Dokument sind folgende Veröffentlichungen zitiert:
[1] DE 100 42 753 A1;
[2] DE 695 20 661 T2.

### Bezugszeichenliste

- 100: Sende-/Empfangs-Einrichtung
- 101: 8bit-Mikroprozessor
- 102: Speicher-Einheit
- 103: Steuer-Schnittstelle
- 104: Kommunikations-Schnittstelle
- 110: Laptop
- 111: Zentrale Datenverarbeitungs-Einheit
- 112: Festplattenspeicher
- 113: Speicherdauer-Verwaltungs-Einrichtung
- 114: Abfrage-Einheit
- 115: Laptop-Schnittstelle
- 120: Waschmaschine
- 130: Pfeil

- 200: Steuersystem
- 210: Sende-/Empfang-Einrichtung
- 211: Steuer-Einheit
- 212: Speicher-Einheit
- 212a: ROM-Teilspeicher
- 212b: Flash-Teilspeicher
- 213: Initialisier-Einrichtung
- 220: Personalcomputer
- 221: Kommunikations-Modul
- 222: Festplattenspeicher
- 223: Middleware-Platform
- 230: Pfeil
- 231: Pfeil
- 232: Pfeil

- 300: Sende-/Empfangs-Einrichtung
- 301: Steuer-Einheit
- 302: Eingabe-/Ausgabe-Einheit
- 303: Flash-Speicher
- 304: ROM-Speicher
- 305: RF-Sende-Empfangs-Einheit
- 306: Mikrocontroller
- 307: physikalische Kommunikationsschicht-Einheit
- 307a: erster Teilbereich
- 307b: zweiter Teilbereich
- 308: Konfigurationsdaten
- 309: Anwendungs-Steuerprogramm
- 309a: erster Teilbereich
- 309b: zweiter Teilbereich
- 310: Initialisier-Protokoll
- 311: Übermittlungs-Protokoll
- 312: TCP/IP-Protokoll-Stack

- 400: Speicher-Einheit
- 401: ROM-Teilspeicher
- 402: RAM/Flash-Teilspeicher
- 403a: erste Ober-Klasse
- 403b: zweite Ober-Klasse
- 403c: dritte Ober-Klasse
- 403d: vierte Ober-Klasse
- 403e: fünfte Ober-Klasse
- 404a: erste Ressourcen-Datei
- 404b: zweite Ressourcen-Datei
- 404c: dritte Ressourcen-Datei
- 405a: erste Unter-Klasse
- 405b: zweite Unter-Klasse
- 406: Ressourcen-Datei

## Patentansprüche

1. Sende-/Empfangs-Einrichtung (100, 210)
• mit einer Steuer-Einheit (101, 211);
• mit einer Speicher-Einheit (102, 212), die mit der Steuer-Einheit (101, 211) gekoppelt ist;
• mit einer Steuer-Schnittstelle (103), die mit der Steuer-Einheit (101, 211) gekoppelt ist;
• mit einer Kommunikations-Schnittstelle (104), die mit der Steuer-Einheit (101, 211) gekoppelt ist;
• wobei in der Speicher-Einheit (102, 212) ein Anwendungs-Steuerprogramm zum Steuern einer Anwendungs-Vorrichtung oder eine das Anwendungs-Steuerprogramm eindeutig identifizierende Identifikationsangabe gespeichert ist, wobei die Identifikationsangabe eine Internetadresse ist, von der aus eine externe Steuer-Vorrichtung (110, 220) das Anwendungs-Steuerprogramm aus dem Internet herunterladen kann;
• wobei die Steuer-Einheit (101, 211) dazu eingerichtet ist, über die Kommunikations-Schnittstelle (104) das Anwendungs-Steuerprogramm bzw. die Identifikationsangabe an die externe Steuer-Vorrichtung (110, 220) zu übermitteln und über die Kommunikations-Schnittstelle (104) von der externen Steuer-Vorrichtung (110, 220) dazu verwendet zu werden, über die Steuer-Schnittstelle (103) die Anwendungs-Vorrichtung zu steuern;
• wobei die externe Steuer-Vorrichtung (110, 220) die das Anwendungs-Steuerprogramm abarbeitende Instanz ist; und
• wobei die Steuer-Einheit (101, 211) ein Mikroprozessor ist, dessen Leistungsfähigkeit bezogen auf die Leistungsfähigkeit eines Prozessors der externen Steuer-Vorrichtung (110, 220) eingeschränkt ist.

2. Sende-/Empfangs-Einrichtung nach Anspruch 1,
bei der die Kommunikations-Schnittstelle (104) derart eingerichtet ist, dass die Kommunikation mit einer externen Steuer-Vorrichtung (110, 220) über Funkverbindung erfolgt.

3. Sende-/Empfangs-Einrichtung nach einem der Ansprüche 1 oder 2, bei der die Steuer-Einheit (101, 211) ein 8bit- oder ein 16bit-Mikroprozessor ist.

4. Sende-/Empfangs-Einrichtung nach einem der Ansprüche 1 bis 3,
die eine Initialisier-Einheit (213) aufweist, die derart eingerichtet ist, dass mittels der Initialisier-Einheit (213) eine Kommunikationsverbindung (230) mit der externen Steuer-Vorrichtung (220) aufbaubar ist.

5. Sende-/Empfangs-Einrichtung nach Anspruch 4,
bei der die Initialisier-Einheit (213) derart eingerichtet ist, dass diese zum Aufbau der Kommunikationsverbindung (230) mit der externen Steuer-Vorrichtung (220) an diese ein Signal übermitteln kann.

6. Sende-/Empfangs-Einrichtung nach Anspruch 4 oder 5,
bei der die Initialisier-Einheit (213) derart eingerichtet ist, dass diese zum Aufbau der Kommunikationsverbindung (230) mit der externen Steuer-Vorrichtung (220) ein Signal von der externen Steuer-Vorrichtung (220) entgegennehmen kann.

7. Sende-/Empfangs-Einrichtung nach einem der Ansprüche 4 bis 6,
bei der als Kommunikationsprotokoll zur Kommunikation zwischen der Initialisier-Einheit (213) und der externen Steuer-Vorrichtung (220) eines der folgenden Kommunikationsprotokolle verwendet wird:
• Common Object Request Broker Architecture (CORBA)
• Simple Service Discovery Protocol (SSDP)
• JXTA oder
• Java Intelligent Network Infrastructure (JINI).

8. Sende-/Empfangs-Einrichtung nach einem der Ansprüche 1 bis 7,
bei der das Anwendungs-Steuerprogramm als Java-Code vorliegt.

9. Sende-/Empfangs-Einrichtung nach einem der Ansprüche 1 bis 8,
ausgestaltet als Embedded System.

10. Steuerbare Anwendungs-Anordnung
• mit einer Anwendungs-Vorrichtung; und
• mit einer mit der Anwendungs-Vorrichtung gekoppelten Sende-/Empfangs-Einrichtung (100, 210) nach einem der Ansprüche 1 bis 9.

11. Steuerbare Anwendungs-Anordnung nach Anspruch 10,
bei der die Anwendungs-Vorrichtung
• eine Sensor-Einrichtung
• eine elektronische Steuer-Einrichtung
• eine Automobilelektronik-Einrichtung oder
• ein Haushalts-Gerät
ist.

12. Steuerbare Anwendungs-Anordnung nach Anspruch 11,
bei der die als Sensor-Einrichtung ausgebildete Anwendungs-Vorrichtung
• ein Temperatur-Sensor
• ein Füllstand-Sensor
• ein Feuchtigkeits-Sensor
• ein Gas-Sensor oder
• ein Druck-Sensor
ist.

13. Steuerbare Anwendungs-Anordnung nach Anspruch 11,
bei der die als Haushalts-Gerät ausgebildete Anwendungs-Vorrichtung
• ein Kühlschrank
• eine Stereoanlage
• eine Heizung
• ein Herd ist.

14. Steuersystem für eine Anwendungs-Vorrichtung
• mit einer Sende-/Empfangs-Einrichtung (100, 210) nach einem der Ansprüche 1 bis 9;
• mit einer externen Steuer-Vorrichtung (110, 220), die dazu eingerichtet ist, mit der Sende-/Empfangs-Einrichtung (100, 210) zu kommunizieren, von der Sende-/EmpfangsEinrichtung (100, 210) das Anwendungs-Steuerprogramm oder die Identifikationsangabe zu empfangen und durch Abarbeiten des Anwendungs-Steuerprogramms die Anwendungs-Vorrichtung über die Sende-/Empfangs-Einrichtung (100, 210) zu steuern.

15. Steuersystem nach Anspruch 14,
bei dem die externe Steuer-Vorrichtung (110, 220)
• eine Workstation;
• ein Personal-Computer;
• ein Laptop;
• ein Webpad;
• ein Mobilfunktelefon;
• ein Palm^{™} oder
• ein Personal Digital Assistant
ist.

16. Steuersystem nach Anspruch 14 oder 15,
bei dem die externe Steuer-Vorrichtung (110, 220) eine Speicher-Einrichtung (112, 222) zum Speichern mindestens eines Anwendungs-Steuerprogramms sowie einen Prozessor (111) aufweist, welcher derart eingerichtet ist, dass er ein Anwendungs-Steuerprogramm ausführen kann, um dadurch eine mit der Sende-/Empfangs-Einrichtung (100, 210) gekoppelte Anwendungs-Vorrichtung zu steuern.

17. Steuersystem nach einem der Ansprüche 14 bis 16,
bei dem die externe Steuer-Vorrichtung (110, 220) eine Speicherdauer-Verwaltungs-Einrichtung aufweist, die derart eingerichtet ist, dass sie für jedes in der Speicher-Einrichtung (112, 222) gespeicherte Anwendungs-Steuerprogramm einen Zeitwert vorgibt, der angibt, nach welcher Zeit ein in der Speicher-Einrichtung gespeichertes Anwender-Steuerprogramm aus der Speicher-Einrichtung (112, 222) gelöscht wird.

18. Steuersystem nach Anspruch 17,
bei dem ein Zeitwert von der Speicherdauer-Verwaltungs-Einrichtung auf der Basis mindestens eines der folgenden Kriterien vorgegeben wird:
• wie häufig wurde das Anwendungs-Steuerprogramm in der Vergangenheit ausgeführt;
• wann wurde das Anwendungs-Steuerprogramm zuletzt ausgeführt;
• welchen Speicherbedarf hat das Anwendungs-Steuerprogramm; und
• welche Art von Anwendung hat das Anwendungs-Steuerprogramm zum Gegenstand.

19. Verfahren zum Betreiben einer Sende-/Empfangs-Einrichtung
• mit einer Sende-/Empfangs-Einrichtung (100, 210)
• mit einer Steuer-Einheit (101, 211);
• mit einer Speicher-Einheit (102, 212), die mit der Steuer-Einheit (101, 211) gekoppelt ist;
• mit einer Steuer-Schnittstelle (103), die mit der Steuer-Einheit (101, 211) gekoppelt ist;
• mit einer Kommunikations-Schnittstelle (1049, die mit der Steuer-Einheit (101, 211) gekoppelt ist;
• wobei in der Speicher-Einheit (102, 212) ein Anwendungs-Steuerprogramm zum Steuern einer Anwendungs-Vorrichtung oder eine das Anwendungs-Steuerprogramm eindeutig identifizierende Identifikationsangabe gespeichert ist, wobei die Identifikationsangabe eine Internetadresse ist, von der aus eine externe Steuer-Vorrichtung das Anwendungs-Steuerprogramm aus dem Internet herunterladen kann;
• wobei mittels der externen Steuer-Vorrichtung (110, 220) über die Steuer-Schnittstelle (103) und über die Kommunikations-Schnittstelle (104) unter Verwendung der Steuer-Einheit (101, 211) die Anwendungs-Vorrichtung steuerbar ist;
• wobei über die Kommunikations-Schnittstelle (104) das Anwendungs-Steuerprogramm oder die Identifikationsangabe an die externe Steuer-Vorrichtung (110, 220) übermittelbar ist;
• wobei gemäß dem Verfahren
• über die Kommunikations-Schnittstelle (104) das Anwendungs-Steuerprogramm oder die Identifikationsangabe an die externe Steuer-Vorrichtung (110, 220) übermittelt wird;
• mittels der externen Steuer-Vorrichtung (110, 220) das Anwendungs-Steuerprogramm abgearbeitet wird und über die Steuer-Schnittstelle (103) und über die Kommunikations-Schnittstelle (104) die Anwendungs-Vorrichtung unter Verwendung der Steuer-Einheit (101, 211) gesteuert wird, die ein Mikroprozessor ist, dessen Leistungsfähigkeit bezogen auf die Leistungsfähigkeit eines Prozessors der externen Steuer-Vorrichtung (110, 220) eingeschränkt ist.

20. Verfahren nach Anspruch 19,
bei dem mittels einer Initialisier-Einheit (213) eine Kommunikationsverbindung (230) zwischen der Sende-/EmpfangsEinrichtung (100, 210) und der externen Steuer-Vorrichtung (110, 220) aufgebaut wird.

## Claims

1. Transceiver (100, 210)
• having a control unit (101, 211);
• having a memory unit (102, 212) which is coupled to the control unit (101, 211);
• having a control interface (103) which is coupled to the control unit (101, 211);
• having a communication interface (104) which is coupled to the control unit (101, 211);
• wherein an application control program for controlling an application apparatus or an identification specification which unambiguously identifies the application control program is stored in the memory unit (102, 212), wherein the identification specification is an Internet address from which an external control apparatus (110, 220) can download the application control program from the Internet;
• wherein the control unit (101, 211) is designed to transmit the application control program or the identification specification to the external control apparatus (110, 220) via the communication interface (104) and is designed to be used by the external control apparatus (110, 220) via the communication interface (104) to control the application apparatus via the control interface (103);
• wherein the external control apparatus (110, 220) is the entity which executes the application control program; and
• wherein the control unit (101, 211) is a microprocessor, the performance of this microprocessor being restricted in relation to the performance of a processor of the external control apparatus (110, 220).

2. Transceiver according to Claim 1,
in which the communication interface (104) is designed in such a way that the communication with an external control apparatus (110, 220) takes place via radio link.

3. Transceiver according to either of Claims 1 and 2, in which the control unit (101, 211) is an 8-bit or a 16-bit microprocessor.

4. Transceiver according to one of Claims 1 to 3,
which has an initialization unit (213) which is designed in such a way that a communication link (230) to the external control apparatus (200) can be established by means of the initialization unit (213).

5. Transceiver according to Claim 4,
in which the initialization unit (213) is designed in such a way that it can transmit a signal to an external control apparatus (220) for the purpose of establishing a communication link (230) to the said external control apparatus (220).

6. Transceiver according to Claim 4 or 5,
in which the initialization unit (213) is designed in such a way that it can receive a signal from the external control apparatus (220) for the purpose of establishing the communication link (230) to the external control apparatus (220).

7. Transceiver according to one of Claims 4 to 6,
in which one of the following communication protocols is used as the communication protocol for communication between the initialization unit (213) and the external control apparatus (220):
• Common Object Request Broker Architecture (CORBA),
• Simple Service Discovery Protocol (SSDP),
• JXTA or
• Java Intelligent Network Infrastructure (JINI).

8. Transceiver according to one of Claims 1 to 7,
in which the application control program is present as Java code.

9. Transceiver according to one of Claims 1 to 8,
configured as an embedded system.

10. Controllable application arrangement
• having an application apparatus; and
• having a transceiver (100, 210) according to one of Claims 1 to 9 which is coupled to the application apparatus.

11. Controllable application arrangement according to Claim 10,
in which the application apparatus is
• a sensor device,
• an electronic control device,
• an automotive electronics device or
• a domestic appliance.

12. Controllable application arrangement according to Claim 11,
in which the application apparatus which is in the form of a sensor device is
• a temperature sensor,
• a filling level sensor,
• a moisture sensor,
• a gas sensor or
• a pressure sensor.

13. Controllable application arrangement according to Claim 11, in which the application apparatus which is in the form of a domestic appliance is
• a refrigerator,
• a stereo system,
• a heating system or
• a cooker.

14. Control system for an application apparatus
• having a transceiver (100, 210) according to one of Claims 1 to 9;
• having an external control apparatus (110, 220) which is designed to communicate with the transceiver (100, 210), to receive the application control program or the identification specification from the transceiver (100, 210), and to control the application apparatus via the transceiver (100, 210) by executing the application control program.

15. Control system according to Claim 14,
in which the external control apparatus (110, 220) is
• a workstation;
• a personal computer;
• a laptop;
• a webpad;
• a mobile radio telephone;
• a Palm™ or
• a personal digital assistant.

16. Control system according to Claim 14 or 15,
in which the external control apparatus (110, 220) has a memory device (112, 222) for storing at least one application control program and also has a processor (111) which is designed in such a way that it can run an application control program in order thereby to control an application apparatus which is coupled to the transceiver (100, 210).

17. Control system according to one of Claims 14 to 16,
in which the external control apparatus (110, 220) has a storage period management device which is designed in such a way that it prescribes, for each application control program which is stored in the memory device (112, 222), a time value which indicates the time after which an application control program which is stored in the memory device is erased from the memory device (112, 222).

18. Control system according to Claim 17,
in which a time value is prescribed by the storage period management device on the basis of at least one of the following criteria:
• how often the application control program has been run in the past;
• when the application control program was run last;
• the memory requirement of the application control program; and
• what type of application the application control program relates to.

19. Method for operating a transceiver,
• having a transceiver (100, 210)
• having a control unit (101, 211);
• having a memory unit (102, 212) which is coupled to the control unit (101, 211);
• having a control interface (103) which is coupled to the control unit (101, 211);
• having a communication interface (104) which is coupled to the control unit (101, 211);
• wherein an application control program for controlling an application apparatus or an identification specification which unambiguously identifies the application control program is stored in the memory unit (102, 212), wherein the identification specification is an Internet address from which an external control apparatus can download the application control program from the Internet;
• wherein the application apparatus can be controlled by means of the external control apparatus (110, 220) via the control interface (103) and via the communication interface (104) using the control unit (101, 211);
• wherein the application control program or the identification specification can be transmitted to the external control apparatus (110, 220) via the communication interface (104);
• wherein, according to the method,
• the application control program or the identification specification is transmitted to the external control apparatus (110, 220) via the communication interface (104);
• the application control program is executed by means of the external control apparatus (110, 220) and the application apparatus is controlled via the control interface (103) and via the communication interface (104) using the control unit (101, 211) which is a microprocessor, the performance of this microprocessor being restricted in relation to the performance of a processor of the external control apparatus (110, 220).

20. Method according to Claim 19,
in which a communication link (230) is established between the transceiver (100, 210) and the external control apparatus (110, 220) by means of an initialization unit (213).

## Revendications

1. Dispositif d'émission/réception (100, 210)
• avec une unité de commande (101, 211) ;
• avec une unité de mémoire (102, 212), qui est couplée à l'unité de commande (101, 211) ;
• avec une interface de commande (103) qui est couplée à l'unité de commande (101, 211) ;
• avec une interface de communication (104) qui est couplée à l'unité de commande (101, 211) ;
• dans l'unité de mémoire (102, 212) étant mémorisé(e) un programme de commande d'application, destiné à commander un dispositif d'application ou une information d'identification identifiant clairement le programme de commande d'application, l'information d'identification étant une adresse Internet, à partir de laquelle un dispositif de commande (110, 220) externe est susceptible de télécharger le programme de commande d'application sur Internet ;
• l'unité de commande (101, 211) étant adaptée pour transmettre via l'interface de communication (104) le programme de commande d'application ou l'information d'identification au dispositif de commande (110, 220) externe et via l'interface de communication (104), pour être utilisée par le dispositif de commande (110, 220) externe pour commander le dispositif d'application via l'interface de commande (103) ;
• le dispositif de commande (110, 220) externe étant l'instance qui exécute le programme de commande d'application ; et
• l'unité de commande (101, 211) étant un microprocesseur dont la capacité de puissance est restreinte en rapport à la capacité de puissance d'un processeur du dispositif de commande (110, 220) externe.

2. Dispositif d'émission/réception selon la revendication 1, dans lequel l'interface de communication (104) est adaptée de telle sorte que la communication avec un dispositif de commande (110, 220) externe s'effectue par l'intermédiaire d'une liaison radio.

3. Dispositif d'émission/réception selon l'une quelconque des revendications 1 ou 2, dans lequel l'unité de commande (101, 211) est un microprocesseur 8 bits ou 16 bits.

4. Dispositif d'émission/réception selon l'une quelconque des revendications 1 à 3,
qui comporte une unité d'initialisation (213), qui est adaptée de telle sorte qu'au moyen de l'unité d'initialisation (213), une liaison de communication (230) puisse être établie avec le dispositif de commande (220) externe.

5. Dispositif d'émission/réception selon la revendication 4,
dans lequel l'unité d'initialisation (213) est adaptée de telle sorte, que pour l'établissement de la liaison de communication (230) avec le dispositif de commande (220) externe, celle-ci soit susceptible de transmettre un signal à cette dernière.

6. Dispositif d'émission/réception selon la revendication 4 ou la revendication 5,
dans lequel l'unité d'initialisation (213) est adaptée de telle sorte, que pour l'établissement de la liaison de communication (230) avec le dispositif de commande (220) externe, celle-ci soit susceptible de recevoir un signal de la part du dispositif de commande (220) externe.

7. Dispositif d'émission/réception selon l'une quelconque des revendications 4 à 6,
pour lequel, en tant que protocole de communication pour la communication entre l'unité d'initialisation (213) et le dispositif de commande externe (220), il est utilisé l'un des protocoles de communication suivants :
• Common Object Request Broker Architecture (CORBA)
• Simple Service Discovery Protocol (SSDP)
• JXTA ou
• Java Intelligent Network Infrastructure (JINI).

8. Dispositif d'émission/réception selon l'une quelconque des revendications 1 à 7,
dans lequel le programme de commande d'application se présente sous la forme d'un code Java.

9. Dispositif d'émission/réception selon l'une quelconque des revendications 1 à 8,
conçu en tant que système embarqué.

10. Agencement d'application commandable
• avec un dispositif d'application ; et
• avec un dispositif d'émission/réception (100, 210) couplé au dispositif d'application selon l'une quelconque des revendications 1 à 9.

11. Agencement d'application commandable selon la revendication 10, dans lequel le dispositif d'application est
• un système de capteurs,
• un système de commande électronique,
• un système d'électronique automobile ou
• un appareil électroménager.

12. Agencement d'application commandable selon la revendication 11,
dans lequel le dispositif d'application conçu sous la forme d'un système de capteurs est
• un capteur de température,
• un capteur de niveau,
• un capteur d'humidité,
• un capteur de gaz ou
• un capteur de pression.

13. Agencement d'application commandable selon la revendication 11,
dans lequel le dispositif d'application conçu sous la forme d'un appareil électroménager est
• un réfrigérateur,
• une chaîne stéréo,
• un chauffage,
• une cuisinière.

14. Système de commande pour un dispositif d'application
• avec un dispositif d'émission/réception (100, 210) selon l'une quelconque des revendications 1 à 9 ;
• avec un dispositif de commande (110, 220) externe, qui est adapté pour communiquer avec le dispositif d'émission/réception (100, 210), réceptionner de la part du dispositif d'émission/réception (100, 210) le programme de commande d'application ou l'information d'identification et par exécution du programme de commande d'application, commander le dispositif d'application via le dispositif d'émission/réception (100, 210).

15. Système de commande selon la revendication 14,
dans lequel le dispositif de commande (110, 220) externe est
• un poste de travail ;
• un PC ;
• un ordinateur portable ;
• une tablette ;
• un téléphone mobile ;
• un palm^{™} ou
• un Personal Digital Assistent (PDA).

16. Système de commande selon la revendication 14 ou la revendication 15,
dans lequel le dispositif de commande (110, 220) externe comporte un système de mémoire (112, 222) pour la mémorisation d'au moins un programme de commande d'application ainsi qu'un processeur (111), lequel est adapté de sorte à pouvoir exécuter un programme de commande d'application, pour commander de ce fait un dispositif d'application couplé au dispositif d'émission/réception (100, 210).

17. Système de commande selon l'une quelconque des revendications 14 à 16,
dans lequel le dispositif de commande (110, 220) externe comporte une installation de gestion de la durée de mémorisation, qui est adaptée de telle sorte, que pour chaque programme de commande d'application mémorisé dans le système de mémoire (112, 222), elle prédéfinisse une valeur de temps qui indique après combien de temps un programme de commande d'application mémorisé dans le système de commande est effacé du système de mémoire (112, 222).

18. Système de commande selon la revendication 17,
dans lequel une valeur de temps est prédéfinie par l'installation de gestion de la durée de mémorisation sur la base d'au moins l'un des critères suivants :
• à quelle fréquence le programme de commande d'application a-t'il été exécuté dans le passé ;
• quand le programme de commande d'application a-t'il été exécuté la dernière fois ;
• quel est le besoin en mémoire du programme de commande d'application et
• quel type d'application fait l'objet du programme de commande d'application.

19. Procédé destiné à faire fonctionner un dispositif d'émission/réception (100, 210)
• avec un dispositif d'émission/réception (100, 210)
• avec un unité de commande (101, 211)
• avec une unité de mémoire (102, 212) qui est couplée à l'unité de commande (101, 211) ;
• avec une interface de commande (103) qui est couplée à l'unité de commande (101, 211) ;
• avec une interface de communication (104) qui est couplée à l'unité de commande (101, 211) ;
• dans l'unité de mémoire (102, 212) étant mémorisé un programme de commande d'application pour commander un dispositif d'application ou une information d'identification identifiant clairement le programme de commande d'application, l'information d'identification étant une adresse Internet, à partir de laquelle un dispositif de commande externe est susceptible de télécharger le programme de commande d'application sur Internet ;
• le dispositif d'application étant commandable au moyen du dispositif de commande (110, 220) externe, via l'interface de commande (103) et via l'interface de communication (104), en utilisant l'unité de commande (101, 211) ;
• le programme de commande d'application ou l'information d'identification étant transmissible au dispositif de commande (110, 220) externe via l'interface de communication (104) ;
selon le procédé
• le programme de commande d'application ou l'information d'identification étant transmis(e) au dispositif de commande (110, 220) externe via l'interface de communication (104) ;
• le programme de commande d'application étant exécuté au moyen du dispositif de commande (110, 220) externe et le dispositif d'application étant commandé via l'interface de commande (103) et via l'interface de communication (104), en utilisant l'unité de commande (101, 211) qui est un microprocesseur, dont la capacité de puissance est restreinte, en rapport à la capacité de puissance d'un processeur du dispositif de commande (110, 220) externe.

20. Procédé selon la revendication 19,
dans lequel au moyen d'une unité d'initialisation (213), une liaison de communication (230) est établie entre le dispositif d'émission/réception (100, 210) et le dispositif de commande (110, 220) externe.
